# FASCICULE DE BREVET EUROPEEN

(11) **EP 1 765 915 B1**
(45) Date de publication et mention de la délivrance du brevet: **04.03.2020**
(21) Numéro de dépôt: 05791135.6
(22) Date de dépôt: 20.07.2005
(51) Int. Cl.: C08J 3/28, C08K 3/32, C08K 5/5313, B29C 67/02

(54) **POUDRES DE POLYAMIDES IGNIFUGES ET LEUR UTILISATION DANS UN PROCEDE D'AGGLOMERATION PAR FUSION.**
FLAMMGESCHÜTZTE POLYAMIDPULVER UND IHRE VERWENDUNG IN EINEM VERFAHREN ZUM AGGLOMERIEREN DURCH VERSCHMELZEN
FLAME-RETARDANT POLYAMIDE POWDERS AND USE THEREOF IN A FUSION AGGLOMERATION PROCESS

(30) Priorité: 20.07.2004 FR 0408016
(43) Date de publication de la demande: 28.03.2007
(73) Titulaire: ARKEMA FRANCE, 92700 Colombes (FR)
(72) Inventeur: DOUAIS, Patrick, F-27410 Le Noyer en Ouche (FR); FILOU, Grégory, F-27500 Pont Audemer (FR)
(74) Mandataire: Hérard, Elise
(86) Numéro de dépôt international: PCT/FR2005/001848
(87) Numéro de publication internationale: WO 2006/018500

(56) Documents cités:
- EP-A- 0 616 008
- EP-A- 1 413 595
- EP-A2- 1 454 948
- WO-A1-2005/010087
- US-B1- 6 207 736
- SCHMACHTENBERG E ET AL: "LASERSINTERN VON POLYAMID. LASER-SINTERING OF POLYAMIDE", KUNSTOFFE, CARL HANSER VERLAG, MUNCHEN, DE, vol. 87, no. 6, 1 June 1997 (1997-06-01), page 773/774,776, XP000656866, ISSN: 0023-5563

## Description

### [Domaine de l'invention]

La présente invention concerne des poudres de polyamide ignifuges et leur utilisation dans un procédé d'agglomération par fusion par exemple sous l'action d'un rayonnement tel qu'un faisceau laser. L'invention se rapporte à des compositions à base de poudres (par exemple de polyamide 11 ou 12), ignifuges, compatibles avec la technique de mise en œuvre par agglomération par fusion par exemple sous faisceau laser. L'objectif est de développer des matériaux qui possèdent de bonnes performances de tenue au feu sans que cela se fasse au détriment des autres performances du matériau (viscosité/rhéologie/écoulement adaptés à l'application visée, propriétés mécaniques de bon niveau) et qui soient transformables par technique d'agglomération par fusion utilisant un rayonnement plus particulièrement par faisceau laser.

### [L'art antérieur et le problème technique]

La technologie d'agglomération de poudres de polyamide sous faisceau laser sert à fabriquer des objets en trois dimensions tels que des prototypes et des modèles. On dépose une fine couche de poudre de polyamide sur une plaque horizontale maintenue dans une enceinte chauffée à une température située entre la température de cristallisation Tc et la température de fusion Tf de la poudre de polyamide. Le laser agglomère des particules de poudre en différents points de la couche de poudre selon une géométrie correspondant à l'objet, par exemple à l'aide d'un ordinateur ayant la forme de l'objet en mémoire et le restituant sous forme de tranches. Ensuite on abaisse la plaque horizontale d'une valeur correspondant à l'épaisseur d'une couche de poudre (par exemple entre 0,05 et 2mm et généralement de l'ordre de 0,1mm) puis on dépose une nouvelle couche de poudre et le laser agglomère des particules de poudre selon une géométrie correspondant à cette nouvelle tranche de l'objet. La procédure est répétée jusqu'à ce qu'on ait fabriqué tout l'objet. On obtient un bloc de poudre contenant à l'intérieur l'objet. Les parties qui n'ont pas été agglomérées sont donc restées à l'état de poudre. Ensuite, on refroidit doucement l'ensemble et l'objet se solidifie dès que sa température descend en dessous de la température de cristallisation Tc. Après complet refroidissement, on sépare l'objet de la poudre qui peut être réutilisée pour une autre opération.

Il est recommandé que la poudre ait un écart Tf - Tc le plus grand possible afin d'éviter les phénomènes de déformation (ou "curling") lors de la fabrication. En effet, au temps t₀, immédiatement après l'action du faisceau laser, la température de l'échantillon est supérieure à la température de cristallisation (Tc) de la poudre mais l'apport d'une nouvelle couche de poudre plus froide fait chuter rapidement la température de la pièce en dessous de Tc et entraîne des déformations.

Par ailleurs une enthalpie de fusion (ΔHf) la plus élevée possible est requise afin d'obtenir une bonne définition géométrique des pièces fabriquées. En effet, si cette dernière est trop faible, l'énergie amenée par le laser est suffisante pour fritter par conduction thermique les particules de poudre proches des parois en construction mais la précision géométrique de la pièce n'est plus satisfaisante.

Il est clair que tout ce qui vient d'être expliqué pour l'agglomération de poudres de polyamide sous faisceau laser est valable quelque soit le rayonnement qui provoque la fusion.

Pour des usages particuliers, il est nécessaire que les objets obtenus aient des propriétés retardatrices de flamme, voire ignifuges, mais aussi répondent à des critères d'émission de fumées et de toxicité.

Dans la suite du texte, par simplification, on utilise le terme "ignifuge" pour les propriétés retardatrices de flamme comme pour les propriétés ignifuges.

Le document US6207736 mentionne le polyphosphate d'ammonium comme retardateur de flamme pouvant être utilisé dans des polymères tels que le polyamide. Le document EP1454948 mentionne le phosphinate de métal, éventuellement mélangé avec un synergisant, Le document US6207736 comme le document EP1454948 décrivent des agents ignifugeants pour polymères en général et sont destinés à des procédés de moulage par injection. Ils ne concernent pas l'utilisation de poudres PA ignifuges dans un procédé d'agglomération de poudres par fusion.

Le document XP00065866 divulgue un procédé Laser sintering utilisant des poudres de polyamide, PA11 ou PA12 notamment, qui ne sont pas ignifugées. Ce document concerne l'utilisation de certaines poudres de polyamide convenant à un procédé d'agglomération de poudre par fusion, et l'optimisation du passage en machine de ces poudres. Ce document indique qu'il est nécessaire de prendre en compte les caractéristiques du matériau pour optimiser son passage en machine dans un procédé de laser sintering. C'est le cas, a fortiori, lorsque ce matériau est additivé.

Le document WO2005010087 divulgue une poudre polymère pour laser sintering comprenant par exemple un polyamide, notamment 612, 11 ou 12, et du polyphosphate d'ammonium éventuellement mélangé à un synergisant.

On montre que des additifs organiques du phosphore à base de phosphinate organique d'un métal et du polyphosphate d'ammonium conviennent au procédé de laser sintering. Il suffit de mélanger ces produits à sec avec la poudre de polyamide. Cette technique de mélange est aussi appelée "dry-blend". On a aussi découvert que les ignifugeants habituels des polyamide ne convenaient pas tous. Par exemple le cyanurate de mélamine ne convient pas.

### [Brève description de l'invention]

La présente invention concerne l'utilisation de poudre de polyamide à propriété ignifuge dans un procédé de fabrication d'objet en polyamide par agglomération de cette poudre par fusion utilisant un rayonnement, caractérisée en ce que :
- le polyamide est le PA 11,
- ladite poudre comprend en poids (le total faisant 100%) :
- 5 à 30% d'un retardateur de flammes, le retardateur de flammes étant un mélange d'au moins un phosphinate organique d'un métal et de polyphosphate d'ammonium ;
- 95 à 70% de polyamide 11 ; et peut contenir
- du borate de zinc en tant que synergisant, dans une proportion entre 0 et 10% en poids pour respectivement 100 à 90 % de l'ignifugeant ou retardateur de flammes, le total synergisant + ignifugeant faisant 100% en poids.

La poudre contient également au moins un agent pris parmi les anti-UV, les antioxydants, les colorants, les pigments, les bactéricides et les agents de fluidisation.

Selon un mode de réalisation, le phosphinate utilisé est choisi parmi les sels phosphiniques de formule (I) et les sels diphosphiniques de formule (II) : 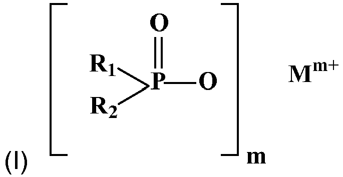 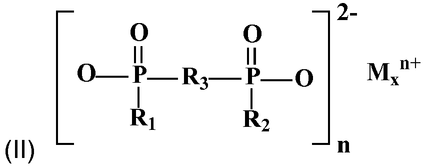
dans lesquelles R¹ et R² sont identiques ou différents et sont des groupes alkyl en C₁ à C₆, linéaires ou branchés et/ou aryl ;
R3 est un groupe alkylène en C₂ à C₁₀, linéaire ou branché, un groupe arylène en C₆ à C₁₀, un groupe alkylarylène en C₆ à C₁₀ ou un groupe arylalkylène en C₆ à C₁₀ ;
M est un ion calcium, aluminium et/ou zinc ;
m est 2 ou 3 ;
n est 1 ou 3 ;
X est 1 ou 2.

L'invention concerne également un article fabriqué avec une poudre de polyamide à propriété ignifuge selon l'invention, ladite poudre étant agglomérée par fusion utilisant un rayonnement.

Elle concerne aussi le procédé de fabrication d'objet en polyamide par agglomération de poudre de polyamide par fusion utilisant un rayonnement, ladite poudre conforme à l'invention comprenant un retardateur de flammes qui est un mélange d'au moins un phosphinate organique d'un métal et d'au moins de polyphosphate d'ammonium.

Selon un mode de réalisation, le rayonnement provient d'un faisceau laser.

Cette poudre peut être préparée par simple mélange à sec (dry blend) des constituants, ceci étant le mode de réalisation préféré.

On peut aussi ajouter le retardateur de flammes dans le polyamide à l'état fondu dans un dispositif de mélange et réduire le produit obtenu sous forme de poudre mais avec dans ce cas un risque de baisse de l'enthalpie de fusion et les conséquences évoquées précédemment au cours de la transformation de la poudre par technologie d'agglomération.

Le polyamide peut être un homopolyamide ou un copolyamide. Il peut être un mélange de polyamide et d'au moins un autre polymère, le polyamide formant la matrice et le ou les autres polymères formant la phase dispersée dans la matrice.

A titre d'exemple de rayonnement on peut citer celui fourni par un faisceau laser (le procédé s'appelle alors "laser sintering"). On peut encore citer le procédé dans lequel un masque est disposé entre la couche de poudre et la source du rayonnement, les particules de poudre protégées du rayonnement par le masque ne sont pas agglomérées.

### [Description détaillée de l'invention]

S'agissant du polyamide, le polyamide 11 (PA 11) est le produit de condensation : de l'acide amino-11-undécanoïque.

Le polyamide peut, avant d'être mélangé à l'ignifugeant, être traité à l'eau ou à la vapeur d'eau selon le procédé décrit dans le brevet EP1413595. Dans ce brevet, on décrit un procédé pour augmenter au moins l'un des deux paramètres suivants d'un polyamide : (i) sa température de fusion et (ii) son enthalpie de fusion ΔHf, procédé dans lequel :
- on met en contact ce polyamide à l'état solide avec de l'eau ou de la vapeur d'eau à une température proche de sa température de cristallisation Tc pendant une durée suffisante pour effectuer cette augmentation,
- puis on sépare l'eau (ou la vapeur d'eau) du polyamide et on sèche le polyamide.

Le polyamide peut être un homopolyamide ou un copolyamide. Il peut être un mélange de polyamide et d'au moins un autre polymère, le polyamide formant la matrice et le ou les autres polymères formant la phase dispersée.

Avantageusement, le polyamide est sous forme divisée telle que de la poudre ou des granulés. Les granulés ainsi traités peuvent être ensuite broyés pour faire des poudres.

Le traitement à l'eau ou à la vapeur d'eau peut aussi être précédé d'un traitement conventionnel au méthanol pour extraire les oligomères éventuels contenus dans le polyamide.

Selon une autre forme, l'eau ou la vapeur d'eau peut contenir du méthanol. On peut ainsi simultanément extraire des oligomères ou des impuretés contenues dans le polyamide à traiter. Il est recommandé dans cette forme de l'invention de rincer le polyamide avant de le sécher pour bien enlever toute trace de méthanol.

S'agissant des ignifugeants ou retardateurs de flammes, leur proportion est comprise entre 5 et 30% en poids pour respectivement 95 à 70 % de polyamide. On peut aussi, en plus des phosphinates organiques d'un métal et du polyphosphate d'ammonium, ajouter du borate de zinc en tant que synergisant. La proportion de borate de zinc pouvant être comprise entre 0 et 10% en poids pour respectivement 100 à 90 % de l'ignifugeant ou retardateur de flammes, le total (synergisant + ignifugeant) faisant 100% en poids.

S'agissant des poudres, elles peuvent être de différentes tailles. Par exemple les poudres utiles dans le procédé de laser sintering peuvent avoir une taille jusqu'à 350µm et sont avantageusement de taille comprise entre 10 et 100µm. De préférence le D50 est de 60µm (c'est à dire que 50% des particules ont une taille inférieure à 60µm).

S'agissant de leur préparation, elle peut être effectuée par simple mélange à sec (dry blend) des constituants. On peut utiliser les mélangeurs habituels des produits en poudre, par exemple le Henschel®. Le mélange se fait à température et pression normale. La durée de mélange doit être suffisante pour que le mélange soit homogène, cette durée peut être comprise entre 2 et 15 minutes.

On peut aussi ajouter l'ignifugeant dans le polyamide à l'état fondu dans un dispositif de mélange et réduire le produit obtenu sous forme de poudre. La durée de mélange doit être suffisante pour que le mélange soit homogène. On utilise par exemple une extrudeuse. Puis le produit récupéré sous forme de granulés en sortie d'extrudeuse est ensuite broyé à la même granulométrie citée pour la poudre de polyamide utilisée dans le procédé en dry blend.

La poudre de l'invention peut comprendre aussi des additifs anti UV, des antioxydants, des colorants, des pigments, des bactéricides entre autres. Ces produits sont de préférence incorporés dans le polyamide avant l'ajout de l'ignifugeant.

Nous allons maintenant décrire plus en détails l'invention. Les pourcentages sont exprimés en poids.

### 1) Fabrication de poudres de PA à propriétés ignifuges

Un mélange de poudre de polyamide est formulé en utilisant un mélangeur rapide Henschel® et en y incorporant du PA 11 adapté à l'agglomération sous faisceau laser avec un D50 de 48 µm et traitée selon le brevet FR2846333 A1 avec un point de fusion de 201 °C et une enthalpie de fusion de 105 J/g, en ajoutant un mélange de composés retardateur de flamme selon les proportions définies plus bas, ainsi que 0,6 % d'un antioxydant phénolique et 0,1 % d'une silice fumée comme agent de fluidisation. La durée de mélange est de 150 s. Le mélange ainsi préparé est tamisé sur une toile ayant une ouverture de 160 µm. La nature des retardateurs de flammes, leurs proportions ainsi que la proportion en PA sont énoncées dans la description des comparatifs et exemples ci-dessous.

### 2) Transformation de la poudre de PA à propriétés ignifuges

Le mélange de poudre préparée selon le procédé de fabrication 1) ci-dessus est chargé dans une machine d'agglomération sous faisceau laser servant à fabriquer des objets en trois dimensions en déposant une fine couche de poudre de polyamide sur une surface horizontale maintenue dans une enceinte chauffée à une température située entre la température de cristallisation et la température de fusion. Le laser agglomère des particules de poudre selon une géométrie correspondant à l'objet par exemple à l'aide d'une machine 3D System Vanguard® ayant la forme de l'objet en mémoire et le restituant sous forme de tranches.

Des plaques de format 12x3 pouces et 0,05 pouces d'épaisseur sont fabriquées pour essais au feu. On mesure sur ces plaques le temps de combustion en seconde (s) et la longueur de combustion en pouce. Les propriétés au feu sont satisfaisantes lorsque la longueur de combustion est < à 6 pouces et le temps de combustion le plus court possible.

Nous allons maintenant décrire trois exemples comparatifs (Cp1 à Cp3) de mélange de PA avec différents retardateurs de flammes inappropriés à l'invention:

### • Avec du cyanurate de mélamine (Cp1)

Un mélange de poudre comprenant 89,3% de PA11, 10 % de cyanurate de mélamine (par exemple Melapur C25) comme retardateur de flammes, 0,6 % d'un antioxydant phénolique et 0,1 % d'une silice fumée comme agent de fluidisation est fabriqué selon le procédé décrit en 1) ci-dessus. Cependant au cours de la phase de transformation de la poudre dont le procédé est décrit en 2), on constate la déformation des pièces en cours de fabrication par laser sintering.

### • Avec du phosphate d'ammonium (Cp2)

Un mélange de poudre comprenant 89,3% de PA11, 10% de phosphate d'ammonium (par exemple Exolit AP 752) comme retardateur de flammes, 0,6 % d'un antioxydant phénolique et 0,1 % d'une silice fumée comme agent de fluidisation est fabriqué selon le procédé décrit en 1). Cependant au cours de la phase de transformation de la poudre décrite en 2), on constate que cette composition est peu adaptée à la construction de pièces du fait de la sublimation d'un composé dans la chambre de fabrication qui tend à atténuer la puissance du faisceau laser et à encrasser la chambre de construction. De plus les pièces obtenues ne montrent pas des propriétés de résistance au feu satisfaisantes puisque le temps de combustion est de 129 s.

### • Avec du polyphosphate d'ammonium (Cp3)

Un mélange de poudre comprenant 89,3% de PA11, 10% de polyphosphate d'ammonium (par exemple Exolit AP 423) comme retardateur de flammes, 0,6 % d'un antioxydant phénolique et 0,1 % d'une silice fumée comme agent de fluidisation est fabriqué selon le procédé décrit en 1). Cependant au cours de la phase de transformation en 2), on constate que cette composition est peu adaptée à la construction de pièces du fait de la formation de fumée dans la chambre de fabrication qui tend à atténuer la puissance du faisceau laser. De plus, les pièces obtenues ne montrent pas des propriétés au feu satisfaisantes puisque la longueur de combustion est de 8,9 pouces alors que l'objectif à atteindre doit être < à 6 pouces et le temps de combustion est de 116 s.

On constate donc que le cyanurate d'ammonium, le phosphate d'ammonium et le polyphosphate d'ammonium, seul, ne permettent pas d'obtenir une composition adaptée à l'utilisation que l'on souhaite en faire.

Nous allons maintenant décrire deux exemples (Ex1 et Ex2) de mélange de PA avec des retardateurs de flammes appropriés à l'invention :

### • Avec 10 % d'un mélange phosphinate/polyphosphate d'ammonium (Ex1)

Un mélange de poudre comprenant 89,3% de PA11, 10% d'un mélange de composés phosphorés (Exolit OP1311 de Clariant) comme retardateur de flammes, 0,6 % d'un antioxydant phénolique et 0,1 % d'une silice fumée comme agent de fluidisation est formulé tel que décrit en 1). Après transformation de la poudre ainsi obtenue selon le procédé de transformation décrit en 2), les pièces fabriquées montrent des propriétés au feu satisfaisantes puisque la longueur de combustion est de 3 pouces et le temps de combustion est de 36 s. L'allongement à la rupture est de 49% et la contrainte à la rupture est de 40 MPa (ASTM638).

### • Avec 15 % d'un mélange phosphinate/polyphosphate d'ammonium (Ex2)

Un mélange de poudre comprenant 84,3% de PA 11, 15 % d'un mélange de composés phosphorés (Exolit OP1311 de Clariant) comme retardateur de flammes, 0,6 % d'un antioxydant phénolique et 0,1 % d'une silice fumée comme agent de fluidisation est formulé tel que décrit en 1). Les pièces obtenues à l'issu de la transformation décrite en 2) montrent des propriétés au feu satisfaisantes avec une longueur de combustion de 3,6 pouces et un temps de combustion de 23 s. L'allongement à la rupture est de 32% et la contrainte à la rupture est de 36 MPa (ASTM638).

Lorsqu'on prépare une poudre de 99,3% de PA11, 0,6 % d'un antioxydant phénolique et 0,1 % d'une silice fumée comme agent de fluidisation selon 1) avec 0% d'agent retardateur de flammes, la longueur de combustion est supérieure à 10 pouces, l'allongement à la rupture est de 52% et la contrainte à la rupture est de 39 Mpa (ASTM 638).

On constate une nette diminution du temps de combustion sans que cela ne pénalise les propriétés mécaniques des objets fabriqués avec la composition selon l'invention par procédé d'agglomération par fusion.

## Revendications

1. Utilisation de poudre de polyamide à propriété ignifuge dans un procédé de fabrication d'objet en polyamide par agglomération de cette poudre par fusion utilisant un rayonnement, **caractérisée en ce que** :
- le polyamide est le PA 11,
- ladite poudre comprend en poids (le total faisant 100%) :
- 95 à 70% de PA 11 ;
- 5 à 30% d'un retardateur de flammes, le retardateur de flammes étant un mélange d'au moins un phosphinate organique d'un métal et de polyphosphate d'ammonium ; et pouvant comprendre du borate de zinc en tant que synergisant, dans une proportion entre 0 et 10% en poids pour respectivement 100 à 90 % du retardateur de flammes, le total synergisant + retardateur de flammes faisant 100% en poids ;
- et au moins un agent pris parmi les anti-UV, les antioxydants, les colorants, les pigments, les bactéricides et les agents de fluidisation.

2. Utilisation selon l'une des revendications précédentes, **caractérisée en ce que** le phosphinate utilisé est choisi parmi les sels phosphiniques de formule (I) et les sels diphosphiniques de formule (II) : 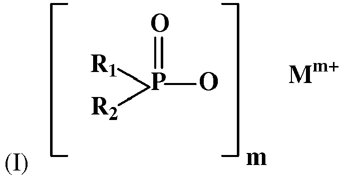 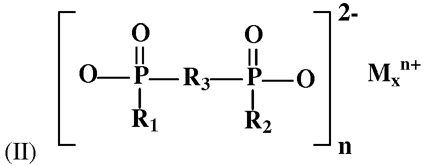
dans lesquelles R¹ et R² sont identiques ou différents et sont des groupes alkyl en C₁ à C₆, linéaires ou branchés et/ou aryl ;
R3 est un groupe alkylène en C₂ à C₁₀, linéaire ou branché, un groupe arylène en C₆ à C₁₀, un groupe alkylarylène en C₆ à C₁₀ ou un groupe arylalkylène en C₆ à C₁₀ ;
M est un ion calcium, aluminium et/ou zinc ;
m est 2 ou 3 ;
n est 1 ou 3 ;
X est 1 ou 2.

3. Article fabriqué avec une poudre de polyamide à propriété ignifuge conforme à l'une quelconque des revendications 1 à 2, ladite poudre étant agglomérée par fusion utilisant un rayonnement.

4. Procédé de fabrication d'objet en polyamide par agglomération de poudre de polyamide par fusion utilisant un rayonnement, ladite poudre étant conforme à l'une quelconque des revendications 1 à 2.

5. Procédé selon la revendication 4 dans lequel le rayonnement provient d'un faisceau laser.

## Patentansprüche

1. Verwendung von Polyamidpulver mit Flammverzögerungseigenschaft in einem Herstellungsverfahren eines Objekts aus Polyamid durch Agglomeration des Pulvers durch Fusion unter Verwendung einer Strahlung, **dadurch gekennzeichnet, dass**
- das Polyamid PA 11 ist,
- das Pulver als Gewicht Folgendes umfasst (macht insgesamt 100 %):
- 95 bis 70 % Polyamid 11;
- 5 bis 30 % ein Flammverzögerer, wobei das Flammverzögerer eine Mischung aus mindestens einem organischen Phosphinat eines Metalls und Ammoniumpolyphosphat ist; und Zinkborat in einem Anteil zwischen 0 und 10 Gewichts-% für jeweils 100 bis 90 % des Flammverzögerers als Synergiemittel umfassen kann, wobei Synergiemittel + Flammverzögerer 100 Gewichts-% ausmacht;
- und mindestens ein Mittel, ausgewählt aus Anti-UV-Mitteln, Antioxidationsmitteln, Farbstoffen, Pigmenten, Bakteriziden und Fluidisierungsmitteln.

2. Verwendung nach einem der vorstehenden Ansprüche, **dadurch gekennzeichnet, dass** das verwendete Phosphinat gewählt ist aus den Phosphinsalzen der Formel (I) und den Diphosphinsalzen der Formel (II): 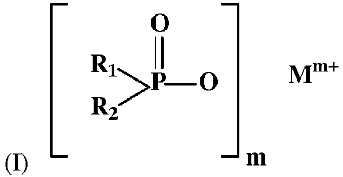 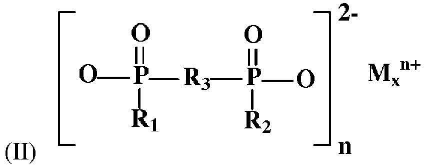
wobei R¹ und R² gleich oder verschieden sind und lineare oder verzweigte C₁- bis C₆-Alkylgruppen und/oder Aryl sind;
R3 eine lineare oder verzweigte C₂- bis C₁₀-Alkylengruppe, eine C₆- bis C₁₀-Arylengruppe, eine C₆- bis C₁₀-Alkylarylengruppe oder eine C₆- bis C₁₀-Arylalkylengruppe ist;
M ein Calcium-, Aluminium- und/oder Zinkion ist;
m 2 oder 3 ist;
n 1 oder 3 ist;
X 1 oder 2 ist.

3. Artikel, hergestellt mit einem Polyamidpulver mit Flammverzögerungseigenschaft gemäß einem der Ansprüche 1 bis 2, wobei das Pulver durch Fusion unter Verwendung einer Strahlung agglomeriert wird.

4. Herstellungsverfahren eines Objekts aus Polyamid durch Agglomeration von Polyamidpulver durch Fusion unter Verwendung einer Strahlung, wobei das Pulver gemäß einem der Ansprüche 1 bis 2 ist.

5. Verfahren nach Anspruch 4, wobei die Strahlung aus einem Laserstrahlenbündel stammt.

## Claims

1. Use of a polyamide powder with fire retardant properties in a method of manufacturing a polyamide object by the agglomeration of this powder by fusion using radiation, **characterized in that:**
- the polyamide is PA 11,
- said powder comprises by weight (the total being 100%):
- 95 to 70% of PA 11;
- 5 to 30% of a flame retardant, the flame retardant being a mixture of at least one metal organic phosphinate and ammonium polyphosphate; and may comprise zinc borate as a synergist, in a proportion between 0 and 10% by weight for respectively 100 to 90% of flame retardant, the total of synergist + flame retardant totaling 100% by weight;
- and at least one agent from among anti-UV, antioxidants, colorants, pigments, bactericides and fluidizing agents.

2. The use according to one of the previous claims, **characterized in that** the phosphinate used is chosen from phosphinic salts having formula (I) and diphosphinic salts having formula (II): 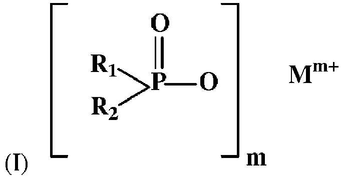 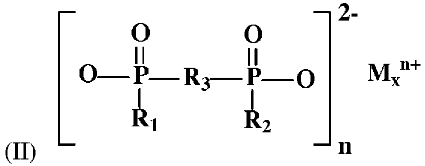
wherein R¹ and R² are identical or different and are linear or branched C₁ to C₆ alkyl and/or aryl groups;
R3 is a linear or branched C₂ to C₁₀ alkylene group, a C₆ to C₁₀ arylene group, a C₆ to C₁₀ alkylarylene group or a C₆ to C₁₀ arylalkylene group;
M is a calcium, aluminum and/or zinc ion;
m is 2 or 3;
n is 1 or 3;
X is 1 or 2.

3. An article made with a polyamide powder with flame retardant properties in accordance with any one of claims 1 to 2, said powder being agglomerated by fusion using radiation.

4. A method of manufacturing a polyamide object by the agglomeration of polyamide powder by fusion using radiation, said powder being in accordance with any one of claims 1 to 2.

5. The method according to claim 4, wherein the radiation comes from a laser beam.
